# EUROPEAN PATENT APPLICATION

(11) **EP 4 640 317 A1**
(43) Date of publication of application: **29.10.2025**
(21) Application number: 24172580.3
(22) Date of filing: 25.04.2024
(51) Int. Cl.: B02C 15/00, B02C 17/00, B02C 17/24, H02K 1/14, H02K 1/18, H02K 5/20, H02K 7/14, H02K 21/24, H02K 1/20, H02K 1/2796, H02K 9/19, H02K 11/33, H02K 9/02

(54) **GEARLESS MILL DRIVES**

(71) Applicant: GE Energy Power Conversion Technology Ltd, Rugby, Warwickshire CV21 1BD (GB)
(72) Inventor: Ramasamy, Anbarasu, CV21 1BD Rugby (GB); Hemmelmann, Jan, 85748 Garching (DE); Galmiche, Christophe, 54250 Champigneulles (FR); Arun, Loganathan, 600032 Chennai (IN)
(74) Representative: Serjeants LLP

(57) **Abstract**

A double-sided, axial flux gearless mill drive (4) for a mill system is described. The gearless mill drive (4) includes a radially-extending rotor assembly (6) fixedly connectable to a mill drum (2) of the mill system. A stator assembly of the gearless mill drive (4) includes a first stator (8) located axially adjacent a first annular surface (6a) of the rotor assembly (6) and a second stator (12) located axially adjacent a second, opposite, annular surface (6b) of the rotor assembly (6).

## Description

### Technical Field

The present invention relates to gearless mill drives, and in particular to drives that may be used to directly rotate the mill drum of a mill system, e.g., a grinding mill system for processing ore.

Each gearless mill drive functions as a double-sided, axial flux electric motor and includes a rotor assembly that in use is fixedly connected to the mill drum, and a stator assembly.

### Background Art

In known gearless mill drives the rotor assembly of the electric motor is directly mounted on the mill drum so that the mill drum effectively becomes an integral part of the rotor assembly. The mill drive functions as a radial flux electric motor and a stator assembly is normally arranged circumferentially around the mill drum. Known gearless mill drives eliminate components such as ring gears, pinions and shaft couplings that are normally found in conventional mill drives for mechanically connecting the mill drive to the mill drum.

### Summary of the invention

The present invention provides an improved gearless mill drive that is used to rotate the mill drum of a mill system, and in particular a double-sided, axial flux gearless mill drive comprising:
a radially-extending rotor assembly fixedly connectable to the mill drum of the mill system; and
a stator assembly comprising;
   a first stator located axially adjacent a first annular surface of the rotor assembly and spaced apart from the first annular surface by a first axial air gap, and
   a second stator located axially adjacent a second, opposite, annular surface of the rotor assembly and spaced apart from the second annular surface by a second axial air gap.

The gearless mill drive functions as a double-sided, axial flux electric motor.

The rotor and stator assemblies extend circumferentially around the mill drum.

Magnetic flux flows through the rotor assembly in the axial direction - i.e., along a direction that is parallel to the axis of rotation of the mill drum. As compared with known gearless mill drives that function as radial flux electric motors, rotor radial eccentricity or offset is significantly reduced during operation. The need in such radial flux electric motors to maintain the radial airgap between the rotor and stator assemblies is eliminated. There is significantly less magnetic unbalance and small axial airgaps may be maintained. In particular, because the rotor assembly is positioned between the first and second stators in the axial direction, the net magnetic attractive force on the rotor assembly is substantially zero since a common magnetic flux flows through the first and second axial air gaps and axial magnetic forces are substantially balanced.

The stator assembly may further comprise a stator frame, e.g., a rigid, annular support that extends circumferentially around the mill drum. The first and second stators may be connected or mounted to the stator frame. The stator frame may be segmented - i.e., it may be formed as two or more frame segments that are assembled together. Any suitable number of frame segments may be used and they may be physically connected or assembled together in any suitable manner. For example, the frame segments may be connected using a plurality of mechanical fixings such as bolts or screws. The stator frame supports the first and second stators and may experience high force in the axial direction, but low force in the radial direction. This may allow the design and structure of the stator frame to be simplified, thereby resulting in significant reductions in manufacturing costs and in the size and weight of the stator frame. It is anticipated that the cost of the stator frame may be about 20% less than a comparative gearless mill drive with radial flux.

The stator frame may define an enclosed space in which the rotor assembly and the first and second stators are located. Cooling air may be circulated through or around the enclosed space for cooling the rotor assembly and the first and second stators - see further description of the air cooling circuit below.

The stator frame may include a first radially-extending wall on which the first stator is connected or mounted, e.g., on an inner annular surface, and a second radially-extending wall on which the second stator is connected or mounted, e.g., on an inner annular surface. The first and second walls may be connected by a third circumferentially- and axially-extending wall so that the enclosed space is defined by the first, second and third walls of the stator frame and the outer surface of the rotating mill drum. A first sealing assembly may be fixedly connected or mounted to the first wall and may seal between the stationary first wall and the outer surface of the rotating mill drum to prevent the leakage of cooling air. A second sealing assembly may be fixedly connected or mounted to the second wall and may seal between the stationary second wall and the outer surface of the rotating mill drum to prevent the leakage of cooling air. Each sealing assembly may include one or more sealing members that are in sliding contact with the mill drum surface. The one or more sealing members of each sealing assembly may be mounted on a carrier that is biased towards the mill drum outer surface by one or more biasing members such as V-shaped spring members that are spaced around the carrier in the circumferential direction.

Cooling air may be introduced into the enclosed space by a fan or blower, for example. The fan or blower may be an external fan or blower - i.e., a fan or blower that is external to the stator frame. The fan or blower may be fluidly connected to an air inlet, for example. The fan or blower may be mounted to the stator frame, e.g., with an impeller part located inside the stator frame for circulating the cooling air and a motor part that is located outside the stator frame. A plurality of fan blades may also be mounted on a radially outer surface of the rotor assembly, which is the surface that faces towards the third wall of the stator frame. The fan blades are adapted to move cooling air through the enclosed space when the rotor assembly is rotating with the mill drum.

The first and second stators may have any suitable construction.

Each stator may comprise a stator winding with a plurality of stator coils. The stator coils may be circumferentially spaced around each stator facing the rotor assembly. The stator coils of the first stator define a first stator winding and the stator coils of the second stator define a second stator winding. Each stator winding may have any suitable construction, i.e., the stator windings may be distributed or concentrated stator windings, for example. Each stator winding may be a multi-phase stator winding, e.g., a three-phase stator winding. In practice, each stator winding may have any suitable number of phases.

The stator coils may be received in a plurality of stator slots formed in the annular surface of each stator that faces towards the rotor assembly. Each stator coil may be inserted into a pair of stator slots. The stator coils may be electrically interconnected to define the stator winding. Each stator slot may receive part of one or more stator coils, i.e., each stator winding may be a single-layer stator winding or a double-layer stator winding, for example.

Each stator coil may comprise a pair of winding runs that extend between a pair of endwindings. The winding runs of each stator coil may be received in a pair of stator slots provided in the annular stator surface.

The stator coils may be wound on teeth of the stator - i.e., each stator winding may be a concentrated or tooth-wound stator winding, for example. The stator teeth may be circumferentially spaced around each stator facing the rotor assembly.

The first stator may comprise a first cooling jacket. The first cooling jacket may comprise a plurality of passages, e.g., radially-extending passages, each passage extending between an inlet opening and an outlet opening. The inlet and outlet openings may be fluidly connected by a plurality of pipes such that the passages and the pipes define one or more cooling circuits adapted to receive cooling liquid for cooling the first stator. The second stator may comprise a second cooling jacket. The second cooling jacket may comprise a plurality of passages, e.g., radially-extending passages, each passage extending between an inlet opening and an outlet opening. (It will be readily understood that the passages do not necessarily have to extend along a radius of the respective cooling jacket, but just generally in the radial direction - e.g., between radially inner and outer end surfaces of the respective cooling jacket.) The inlet and outlet openings may be fluidly connected by a plurality of pipes such that the passages and the pipes define one or more cooling circuits adapted to receive cooling liquid for cooling the second stator. The first and second stators may therefore be cooled by two separate cooling circuits, namely the one or more liquid cooling circuits that are adapted to receive cooling liquid (e.g., water), and the air cooling circuit. Some level of cooling may therefore be maintained by the air cooling circuit even if there is a fault with the liquid cooling circuit(s), for example. The first and second cooling jackets may be fixedly connected or mounted to the stator frame.

The first and second cooling jackets may be made of a suitable metal or metal alloy (e.g., steel, stainless steel or aluminium). The passages for the cooling liquid may be formed as bores in the body of each cooling jacket, for example. Such bores may be accurately machined and minimise leakage of cooling liquid into the body of the cooling jackets. Because the cooling liquid flows directly through the cooling jackets, there is improved transfer of heat from the stator windings to the cooling liquid. The first and second cooling jackets may be segmented - i.e., they may be formed as two or more jacket segments that are assembled together. Any suitable number of jacket segments may be used and they may be physically connected or assembled together in any suitable manner. For example, the jacket segments may be connected using a plurality of mechanical fixings such as bolts or screws.

The passages in each cooling jacket are fluidly connected together by the plurality of external pipes to define the one or more liquid cooling circuits. For example, each cooling jacket may have a plurality of liquid cooling circuits that are fluidly connected in parallel between a common circuit inlet and outlet, or one or more zig-zag or serpentine liquid cooling circuits where the cooling liquid flows through each cooling jacket in two directions. A plurality of such zig-zag or serpentine liquid cooling circuits may be fluidly connected in parallel between a common circuit inlet and outlet. In general terms, the one or more liquid cooling circuits of each cooling jacket may have one or more cooling circuit inlets fluidly connected to a source of cooling liquid and one or more cooling circuit outlets fluidly connected to a drain of cooling liquid. In the case of a closed-loop liquid cooling circuit, the one or more cooling circuit outlets may be fluidly connected to the one or more cooling circuit inlets for re-circulation of the cooling liquid. The one or more liquid cooling circuits may comprise one or more heat exchangers for removing heat from the cooling liquid and one or more pumps for circulating the cooling liquid, for example. The heat exchanger(s) and pump(s) may be external to the gearless mill drive.

The inlet and outlet openings between which each passage extends may be formed in radially inner and outer end surfaces of each cooling jacket. Each end surface may comprise only inlet openings, only outlet openings, or a mixture of inlet and outlet openings depending on the particular arrangement of the one or more liquid cooling circuits. At least some of the pipes may be substantially U-shaped and may fluidly connect the outlet opening of one of the passages with the inlet opening of another passage. Other pipes may fluidly connect the inlet opening of one or more of the passages with a cooling circuit inlet while other pipes may fluidly connect the outlet opening of one or more of the passages with a cooling circuit outlet. Pipes at the radially inner end surface of each cooling jacket are spaced apart from the facing mill drum surface so that they do not obstruct rotation of the mill drum during operation of the mill system.

The pipes may be fixedly connected to each cooling jacket, e.g., by welding, bonding or fitting them to the cooling jacket body. This allows for easy detection of the leakage of the cooling liquid by visually inspecting the weld sites at the ends of the cooling jackets, for example.

Each cooling jacket may define a structural part of the respective stator. The first stator may comprise a plurality of first stator segments and the second stator may comprise a plurality of second stator segments. The first stator segments may be removably mounted to the first cooling jacket or to another structural part of the first stator. The second stator segments may be removably mounted to the second cooling jacket or to another structural part of the second stator. Such structural parts may be rigid, annual supports that are similar to the cooling jackets but which do not provide for cooling. Alternatively, the first and second stator segments may be removably mounted to respective parts of the stator frame - i.e., there is no cooling jacket or other structural part. Each first stator segment may have at least one engagement profile and an annular surface of the first cooling jacket or other structural part of the first stator (i.e., the surface that faces towards the first annular surface of the rotor assembly) may comprise a plurality of circumferentially-spaced corresponding engagement profiles. Each second segment may have at least one engagement profile and an annular surface of the second cooling jacket or other structural part of the second stator (i.e., the surface that faces towards the second annular surface of the rotor assembly) may comprise a plurality of circumferentially-spaced corresponding engagement profiles. For example, each stator segment may have one or more dovetail or T-shaped profiles and each cooling jacket or other structural part may have a plurality of corresponding dovetail or T-shaped profiles in its annular surface. In one arrangement, each stator segment may have one or more protrusions with an engagement profile and each cooling jacket or other structural part may have a plurality of recesses with a corresponding engagement profile, where each recess receives a protrusion of a respective stator segment. In another arrangement, each stator segment may have one or more recesses with an engagement profile and each cooling jacket or other structural part may have a plurality of protrusions, where each protrusion is received in a recess of a respective stator segment. Each protrusion and its corresponding recess are designed to permit the stator segments to move radially relative to the cooling jackets or other structural parts during an assembly process with each protrusion received in its corresponding recess, but to prevent movement of each stator segment in the axial and circumferential directions. This also allows each stator segment to be removed from the respective cooling jacket or other structural part of the respective stator in the radial direction if necessary, e.g., if a particular stator segment is faulty and needs to be replaced. Similar engagement profiles may be used to removably mount the stator segments directly to the stator frame.

The stator segments of each stator may be spaced apart from each other in the circumferential direction, e.g., by a circumferential gap.

Each stator segment may comprise at least one stator slot for receiving the winding run of at least one stator coil. Each stator slot may be formed in a surface of the stator segment that faces towards the rotor assembly across the axial air gap. Each engagement profile may be formed in the opposite surface of the stator segment - i.e., the surface that faces away from the rotor assembly and towards the respective cooling jacket or other structural part to which the stator segment is removably mounted. Each stator segment may comprise two or more stator slots. The stator slots in each stator segment may be substantially parallel to one another or arranged at an appropriate angle to each other - e.g., each stator slot may extend along a radius of the stator. Alternatively, each stator segment may comprise or at least one stator tooth with a tooth-wound stator coil, for example.

After the first stator segments are mounted to the first cooling jacket or other structural part of the first stator, the stator coils may be inserted into the stator slots of the first stator segments and electrically interconnected to define a first stator winding of the stator assembly, e.g., a first multi-phase stator winding. After the second stator segments are mounted to the second cooling jacket or other structural part of the second stator, the stator coils may be inserted into the stator slots of the second stator segments and electrically interconnected to define a second stator winding of the stator assembly, e.g., a second multi-phase stator winding. The first and second stator windings may be electrically connected to a power converter, for example, for supplying power to the stator windings to operate the gearless mill drive. The power converter may be electrically connected to a power network or grid, for example, and may be used to control the rotational speed and/or torque of the gearless mill drive in a known manner.

The power converter may have any suitable construction or topology.

The power converter may comprise a first converter assembly electrically connected to the first stator winding and a second converter assembly electrically connected to the second stator winding. The first converter assembly may comprise a plurality of first converter units, each first converter unit being electrically connected to one or more interconnected stator coils of the first stator winding. The second converter assembly may comprise a plurality of second converter units, each second converter unit being electrically connected to one or more interconnected stator coils of the second stator winding. The power converter may employ power electronics in the converter units for active control.

The first and second converter assemblies may be physically mounted to the stator frame - i.e., to the rigid structural support to which the first and second stators are also connected or mounted. For example, the plurality of first and second converter units may be physically mounted to the stator frame.

The first and second converter assemblies may be physically mounted to outer (i.e., external) surfaces of the stator frame. The rotor assembly, the first and second stators, and the first and second converter assemblies (e.g., the converter units) may be surrounded by an enclosure or housing. The enclosure may form part of the stator frame. Alternatively, the enclosure may be formed as a separate component and the stator frame may also be surrounded by the enclosure. The enclosure may include a first radially-extending wall and a second radially-extending wall. The first and second walls may be connected by a third circumferentially- and axially-extending wall so that the rotor assembly, the first and second stators, and the first and second converter assemblies (e.g., the plurality of first and second converter units) are located within an enclosed space that is defined by the first, second and third walls of the enclosure and the outer surface of the rotating mill drum. A first sealing assembly may be fixedly connected or mounted to the first wall and may seal between the stationary first wall and the outer surface of the rotating mill drum to prevent the leakage of cooling air. A second sealing assembly may be fixedly connected or mounted to the second wall and may seal between the stationary second wall and the outer surface of the rotating mill drum to prevent the leakage of cooling air. Each sealing assembly may include one or more sealing members that are in sliding contact with the mill drum surface. The one or more sealing members of each sealing assembly may be mounted on a carrier that is biased towards the mill drum surface by one or more biasing members such as V-shaped spring members that are spaced around the carrier in the circumferential direction. Cooling air may be introduced into the enclosed space by a fan or blower, for example. The fan or blower may be an external fan or blower - i.e., a fan or blower that is external to the enclosure. The fan or blower may be fluidly connected to an air inlet, for example. The fan or blower may be mounted to the enclosure, e.g., with an impeller part located inside the enclosure for circulating the cooling air and a motor part that is located outside the enclosure. Cooling air may be introduced into the enclosed space inside the stator frame (e.g., to cool the rotor assembly and the first and second stators) and also into the enclosed space inside the outer enclosure or housing to cool the first and second converter assemblies if they are located outside the stator frame.

Each stator segment may have a laminated construction. The stator segments may be formed from a stack of thin lamination sheets that are stamped or cut to have an outer profile. The lamination sheets may optionally be made of electrical grade steel with an insulating coating. The lamination sheets are stacked together in the radial direction. The laminated construction significantly reduces eddy current losses in the stator segment during operation of the gearless mill drive. The stacked lamination sheets may be clamped or preferably bonded. The stator coils may be pre-formed using any known method, including a "resin rich" process where the individual stator coils are impregnated with a suitable resin and then inserted into the stator segment. Alternatively, during manufacture of the stator segments, one or more stator coils may be received in one or more stator slots with suitable slot insulation and the whole stator segment may be subjected to a vacuum pressure impregnation (VPI) process using a suitable resin. In other words, the stator segments may be pre-fabricated to include one or more integral stator coils that may be electrically interconnected after the stator segments have been inserted.

Each stator segment may be formed from lamination sheets whose shape varies in the radial direction - i.e., in the stacking direction. This may allow each stator segment to have a desired shape or profile. For example, the stator segments may be wedge-shaped when viewed in the axial direction and where the radially inner surface of each stator segment is shorter in the circumferential direction than the radially outer surface. The individual lamination sheets may have one or more cutout portions along one edge that define the stator slot(s) in the surface of the stator segment when the lamination sheets are stacked together in a suitable order. If each stator segment has two or more stator slots, the cutout portions for each individual lamination sheet may be selected so that the stator slots in each stator segment are substantially parallel to one another or so that they are arranged at an appropriate angle to each other, e.g., so that each stator slot extends along a radius of the stator. To simplify the stacking process, the lamination sheets may be marked to identify their order in the lamination stack.

Each stator segment may be formed from identical lamination sheets - i.e., all of the lamination sheets have the same outer profile. This may reduce manufacturing costs and simplify the stacking process. After the lamination sheets have been stacked together and bonded, the stator segment may need to be machined to a desired shape - e.g., so that each stator segment is wedge-shaped as described above. The individual lamination sheets may have one or more cutout portions along one edge that define the stator slot(s) in the surface of the stator segment when the lamination sheets are stacked together. If identical lamination sheets are used, and each stator segment has two or more stator slots, the stator slots in each stator segment are normally substantially parallel to one another in the radial direction.

The rotor assembly may have any suitable construction. Depending on the rotor construction, the gearless mill drive may function as a synchronous or asynchronous/induction electric motor. For example, the rotor assembly may be a wound rotor with a rotor winding, a squirrel cage rotor with a plurality of radially-extending electrically conductive bars spaced circumferentially around the rotor assembly and electrically connected between a pair of electrically conductive rings (or "short-circuit rings") that are spaced apart in the radial direction, a permanent magnet rotor with a plurality of permanent magnets spaced circumferentially around the rotor assembly - e.g., on the first and second annular surfaces of the rotor assembly or within the rotor assembly, or a salient pole/reluctance rotor assembly with a plurality of salient poles spaced circumferentially around the rotor assembly.

The rotor assembly may be a squirrel cage rotor and may be segmented - i.e., formed from a plurality of rotor segments that are arranged circumferentially around the mill drum. Any suitable number of rotor segments may be used. Each rotor segment may be fixedly connected to the outer surface of the mill drum and may include an electrically conductive radially inner member and an electrically conductive radially outer member. The radially inner member may be fixedly connected to the outer surface of the mill drum, e.g., using a plurality of mechanical fixings such as bolts or screws, for example. The radially inner and outer members are spaced apart in the radial direction. A plurality of electrically conductive bars may extend between the radially inner and outer members and may be electrically connected thereto. The bars extend substantially in the radial direction and are spaced apart in the circumferential direction. The radially inner member of each rotor segment may be electrically connected to the radially inner member of the circumferentially-adj acent rotor segments - i.e., to define an electrically conductive radially inner ring (or radially inner "short-circuit ring"). The radially outer member of each rotor segment may be electrically connected to the radially outer member of the adjacent rotor segments - i.e., to define an electrically conductive radially outer ring (or radially outer "short-circuit ring"). The electrical connections between the radially inner members of the adjacent rotor segments may be made using electrically conductive flexible connectors. Similarly, the electrical connections between the radially outer members of the adjacent rotor segments may be made using electrically conductive flexible connectors. The rotor segments may be spaced apart in the circumferential direction and then electrically connected by the flexible connections. The rotor segments may also be arranged in abutment or may even overlap in the circumferential direction - i.e., they may be physically and electrically connected together using a plurality of mechanical fixings such as bolts or screws, or by brazing or similar. For brazing, any suitable braze material may be used. Electrical connections between the adjacent rotor segments are not strictly required - the gearless mill drive will operate even if the individual rotor segments remain electrically isolated from each other, but at a reduced torque level.

The radially inner and outer members, and the bars of each rotor segment, may be made of a suitable metal or metal alloy (e.g., copper or aluminium).

The radially inner part of each rotor segment may have an increased thickness (i.e., its dimension in the axial direction) to provide a higher mechanical strength where it is fixedly connected to the mill drum.

The circumferential gaps between the bars of each rotor segment may be filled with inserts. The inserts may project beyond the remainder of each rotor segment in both axial directions - i.e., towards the facing first and second stators. The inserts may project beyond the opposite surfaces of the radially inner and outer members and the bars of each rotor segment to minimise the first and second axial air gaps. The inserts may be sized and shaped to substantially fill the gaps between the bars of each rotor segment. It will be understood that each gap is framed by an adjacent pair of bars and the radially inner and outer members.

Each insert may have a laminated construction. The inserts may be formed from a stack of thin lamination sheets that are stamped or cut to have an outer profile. The lamination sheets may optionally be made of electrical grade steel with an insulating coating. The lamination sheets are stacked together in the radial direction. The stacked lamination sheets may be bonded. Alternatively, each insert may have a solid construction and may be formed from any suitable metal or metal alloy (e.g., iron).

Such a segmented squirrel cage rotor assembly may be advantageous because of its low cost and low maintenance requirements. In particular, its cost is significantly less than a wound rotor or a permanent magnet rotor, for example.

In one arrangement, each rotor segment may be formed from an electrically conductive pre-fabricated section, where each section includes a radially inner member, a radially outer member, and a plurality of bars that extend between the radially inner and outer members. The bars extend substantially in the radial direction and are spaced apart in the circumferential direction. Each pre-fabricated section may be integrally formed. For example, the radially inner and outer members and the bars of each pre-fabricated section may be integrally formed by casting a suitable metal or metal alloy (e.g., copper or aluminium) or by using additive manufacturing. The radially inner and outer members and the bars of each pre-fabricated section may also be formed as separate components that are fixedly connected together to form each pre-fabricated section. A plurality of inserts may be located in the circumferential gaps between adjacent bars. Each insert may be formed in two or three pieces - that is each insert may comprise a first plate piece that is larger than the gap so that a peripheral part overlaps with one side of the pre-fabricated section, a second plate piece that is larger than the gap so that a peripheral part overlaps with the other side of the pre-fabricated section, and an inner piece that is located in the gap between the bars. The inner piece is also located axially (or "sandwiched") between the first and second plate pieces. The inner piece may be sized and shaped to substantially fill the gap and may be integrally formed with one of the plate pieces (i.e., for a two-piece insert). The peripheral or overlapping parts of the first and second plate pieces may be fixedly connected to the pre-fabricated section using one or more mechanical fixings such as bolts or screws.

In another arrangement, each rotor segment may be formed from a pair of electrically conductive pre-fabricated sections, where each section includes a radially inner member, a radially outer member, and a plurality of bars that extend between the radially inner and outer members. The bars extend substantially in the radial direction and are spaced apart in the circumferential direction. Each pre-fabricated section may be integrally formed. For example, the radially inner and outer members and the bars of each pre-fabricated section may be integrally formed by casting a suitable metal or metal alloy (e.g., copper or aluminium) or by using additive manufacturing. The radially inner and outer members and the bars of each pre-fabricated section may also be formed as separate components that are fixedly connected together to form each pre-fabricated section. A plurality of inserts may be located between (or "sandwiched" between) the two aligned pre-fabricated sections and the pre-fabricated sections may be fixedly connected together - e.g., using a plurality of mechanical fixings such as bolts or screws, or by brazing or similar. For brazing, any suitable braze material may be used. When the two pre-fabricated sections are fixedly connected together, the radially inner members are in abutment and define a common radially inner member of the rotor segment etc. The inserts may be retained securely between the pre-fabricated sections once the sections have been fixedly connected together. Each insert may be formed with engagement features that abut against the adjacent bars and/or the radially inner and outer members to prevent movement in the axial direction. Movement in the circumferential and radial directions is prevented by the adjacent bars and the radially inner and outer members. The inserts may also be retained using a plurality of mechanical fixings such as bolts or screws.

In another arrangement, each rotor segment may be formed by fixedly connecting a plurality of electrically conductive bars to an electrically conductive radially inner member and an electrically conductive radially outer member. Each bar may have an I-shaped cross-section (i.e., formed as an I-beam). Each bar therefore has a pair of grooves in which inserts may be retained securely. One end of each bar may be fixedly connected to one of the radially inner and outer members, e.g., by brazing or similar. The inserts may then be inserted into the circumferential gaps between adjacent bars where each insert is retained securely by the facing grooves of the adjacent bars. In particular, each insert may be slid into the facing grooves of the adj acent bars that frame the respective gap until it contacts the radially inner or outer member. The other one of the radially inner and outer members may then be fixedly connected to the other end of each bar, e.g., by brazing or similar. The inserts are therefore retained securely within the grooves and the radially inner and outer members and movement in the axial, circumferential and radial directions is prevented. Any suitable braze material may be used to fix the ends of the bars to the radially inner and outer members. The radially inner and outer members and the bars may be separately formed from a suitable metal or metal alloy (e.g., copper or aluminium). The radially inner and outer members may include a plurality of recesses for receiving the respective end of each bar. For example, the recesses may be formed in the radially inner surface of the radially outer member and the in the radially outer surface of the radially inner member. Each recess may be substantially I-shaped and may be fairly shallow.

The present invention further provides a mill system comprising a mill drum and a double-sided, axial flux gearless mill drive as described above fixedly connected to the outer surface of the mill drum. The mill drive may be fixedly connected to an outer cylindrical surface of the mill drum, for example.

The mill system may comprise a plurality of double-sided, axial flux gearless mill drives as described above, each gearless mill drive being fixedly connected to the outer surface of the mill drum. The gearless mill drives are spaced apart in the axial direction - i.e., along the direction that is parallel to the axis of rotation of the mill drum. Such an arrangement may allow the mill system to operate even if there is a fault in one of the gearless mill drives.

### Drawings

Figure 1 is a schematic view of a mill system with a mill drum and a double-sided, axial flux gearless mill drive according to the present invention;
Figure 2 is a cross section view of the gearless mill drive of Figure 1;
Figure 3 is a perspective view of the gearless mill drive of Figure 2 without the stator frame and mill drum;
Figure 4 is a perspective view of a cooling jacket;
Figure 5 is a perspective view of an alternative cooling jacket;
Figures 6 and 7 are perspective views of an alternative stator;
Figure 8 is a cross section view of the cooling jacket of Figure 5;
Figure 9A is a front view of a stator segment with non-parallel stator slots;
Figure 9B is a rear view of the stator segment of Figure 9A;
Figure 9C is a top view of the stator segment of Figure 9A;
Figure 9D is a bottom view of the stator segment of Figure 9A;
Figure 10 is a front view of the stator segment of Figure 9A with stator coils inserted;
Figure 11A is a front view of a stator segment with parallel stator slots;
Figure 11B is a rear view of the stator segment of Figure 11A;
Figure 11C is a top view of the stator segment of Figure 11A;
Figure 11D is a bottom view of the stator segment of Figure 11A;
Figure 12 is a front view of two stator segments of Figure 11A with stator coils inserted;
Figure 13A is a front view of a laminated stator segment with non-parallel stator slots;
Figures 13B is a cross section view along line A-A of Figure 13A;
Figure 13C is a cross section view along line B-B of Figure 13A;
Figure 13D is a cross section view along line C-C of Figure 13A;
Figure 14 is a front view of a laminated stator segment with parallel stator coils and showing areas to be machined;
Figure 15 is a cross section view of a gearless mill drive with mounted converter assemblies;
Figure 16 is a cross section view of a gearless mill drive with mounted converter assemblies and an outer enclosure;
Figure 17 is a perspective view of a rotor assembly of the gearless mill drive of Figure 1;
Figure 18 is a perspective view of a rotor segment;
Figure 19 is an exploded view of the rotor segment of Figure 18;
Figure 20 is a cross section view of the rotor of Figure 17;
Figure 21 is a detail view of a pair of circumferentially-adjacent rotor segments;
Figure 22A is a front view of a laminated insert;
Figure 22B is a top view of a laminated insert;
Figure 23 is a perspective view of a first pre-fabricated section of a first alternative rotor segment;
Figure 24 is a detail view showing how the laminated inserts of Figures 22A and 22B are inserted into the first pre-fabricated section of Figure 23;
Figure 25 is a perspective view of a second pre-fabricated section of the first alternative rotor segment;
Figure 26 is a perspective view of the first alternative rotor segment formed from the first and second rotor sections of Figures 23 and 25, and the laminated inserts of Figures 22A and 22B;
Figure 27 is a perspective view of a radially outer member of a second alternative rotor segment;
Figure 28 is a perspective view of a radially inner member of the second alternative rotor segment;
Figure 29A is a front view of a wedge-shaped bar of the second alternative rotor segment;
Figure 29B is a perspective view of the bar of Figure 29A;
Figure 30 is a perspective view showing the bars relative to the radially inner member of the second alternative rotor segment;
Figure 31 is a perspective view showing an insert positioned between the bars of the second alternative the rotor segment;
Figure 32 is a perspective view of the inserts positioned between the bars of the second alternative rotor segment assembled to the radially inner member;
Figure 33 is a perspective view showing the radially outer member and the bars and inserts assembled to the radially inner member;
Figure 34 is a perspective view of part of the assembled second alternative rotor segment; and
Figure 35 is a perspective view of a mill system with multiple double-sided, axial flux gearless mill drives according to the present invention.

### Specific description

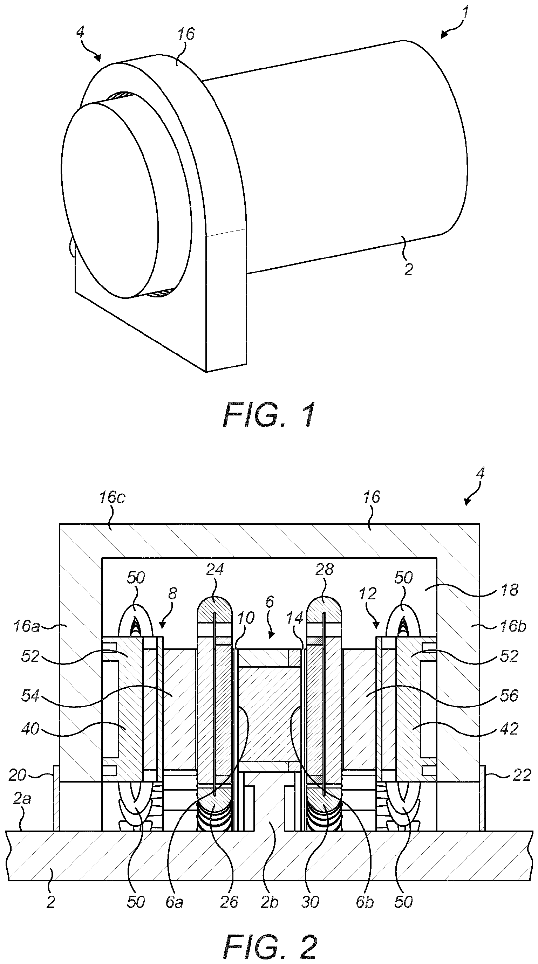

Referring to Figure 1, a mill system 1 includes a mill drum 2 and a double-sided, axial flux gearless mill drive 4 that is used to rotate the mill drum 2.

Referring to Figure 2, the gearless mill drive 4 includes a radially-extending rotor assembly 6 that is fixedly connected to the mill drum 2. A first stator 8 is located axially adjacent a first annular surface 6a of the rotor assembly 6 and is spaced apart from the first annular surface by a first axial air gap 10. A second stator 12 is located axially adjacent a second annular surface 6b of the rotor assembly 6 and is spaced apart from the second annular surface by a second axial air gap 14.

The rotor assembly 6 and the first and second stators 8, 12 extend circumferentially around the mill drum 2.

Magnetic flux flows through the rotor assembly 6 in the axial direction - i.e., along a direction that is parallel to the axis of rotation of the mill drum 2.

The first and second stators 8, 12 are mounted to a stator frame 16, e.g., a rigid, annular support that extends circumferentially around the mill drum 2. The stator frame 16 supports the first and second stators 8, 12 and may experience high force in the axial direction, but low force in the radial direction. This may allow the design and structure of the stator frame 16 to be simplified, thereby resulting in significant reductions in manufacturing costs and in the size and weight of the stator frame. The stator frame 16 may be segmented.

The stator frame 16 defines an enclosed space 18 in which the rotor assembly 6 and the first and second stators 8, 12 are located. Cooling air is circulated through or around the enclosed space 18 for cooling the rotor assembly 6 and the first and second stators 8, 12. Cooling air is introduced into the enclosed space 18 by an external fan or blower (not shown), for example. The fan or blower (not shown) is fluidly connected to an air inlet (not shown) on the stator frame 16 through which the cooling air is introduced, or is mounted to the stator frame 16 with an impeller part located inside the stator frame and a motor part that is located outside the stator frame, for example.

The stator frame 16 shown in Figure 2 has a U-shaped cross-section and includes a first radially-extending wall 16a with an inner surface on which the first stator 8 is mounted, and a second radially-extending wall 16b with an inner surface on which the second stator 12 is mounted. The first and second walls 16a, 16b are connected by a third circumferentially- and axially-extending wall 16c so that the enclosed space 18 is defined by the first, second and third walls 16a, 16b and 16c of the stator frame 16 and the outer surface 2a of the rotating mill drum 2. A first sealing assembly 20 is fixedly mounted to the first wall 16a and seals between the stationary first wall and the outer surface 2a of the rotating mill drum 2 to prevent the leakage of cooling air. A second sealing assembly 22 is fixedly mounted to the second wall 16b and seals between the stationary second wall and the outer surface 2a of the rotating mill drum 2 to prevent the leakage of cooling air. Although not shown, each sealing assembly 20, 22 may include one or more sealing members that are in sliding contact with the mill drum surface 2a.

The first stator 8 comprises a multi-phase, double-layer first stator winding 24 with a plurality of stator coils 26 that are circumferentially spaced around the first stator facing the rotor assembly 6. The second stator 12 comprises a multi-phase, double-layer second stator winding 28 with a plurality of coils 30 that are circumferentially spaced around the second stator facing the rotor assembly 6.

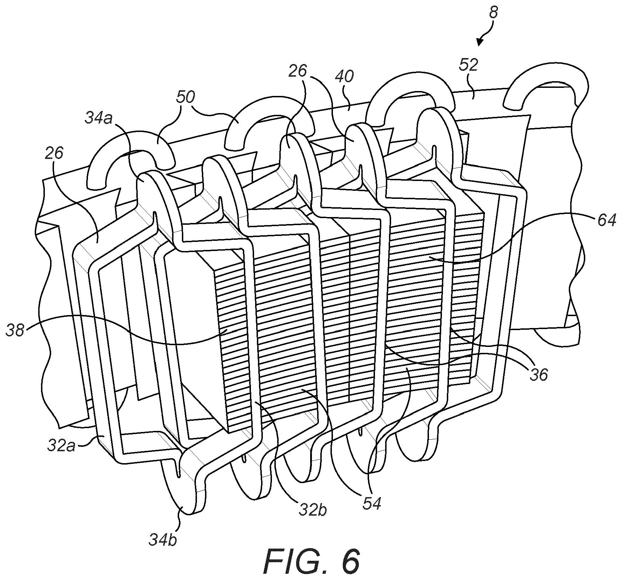

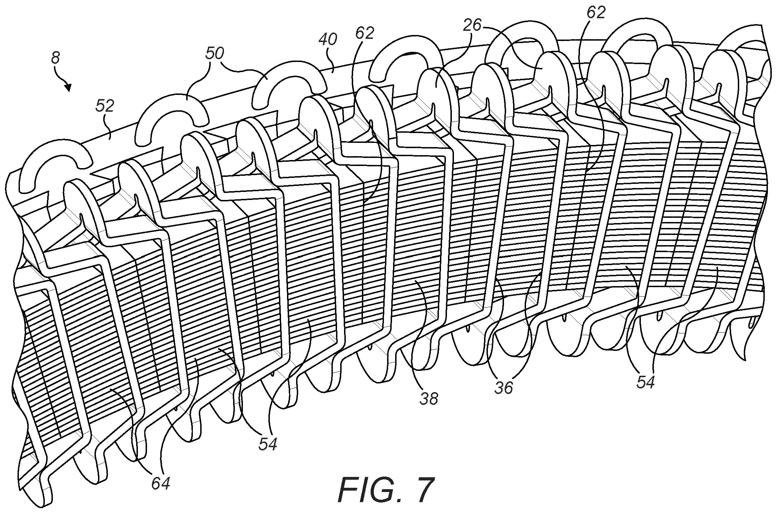

Each stator coil 26, 30 has a pair of winding runs that extend between a pair of endwindings. Figure 6, for example, clearly shows the winding runs 32a, 32b of a stator coil 26 that extend between endwindings 34a, 34b. The winding runs of each stator coil 26, 30 are received in stator slots provided in the annular stator surface of the respective stator 8, 12 that faces towards the rotor assembly 6. For example, the stator coils 26 of the first stator winding 24 are received in stator slots 36 provided in the annular stator surface 38 of the first stator 8 that faces towards the rotor assembly 6. Because the stator winding 24 is a double-layer winding, each stator slot 36 receives the winding run of a first stator coil and the winding run of a second stator coil. This is most clearly shown in Figures 6 and 7, for example.

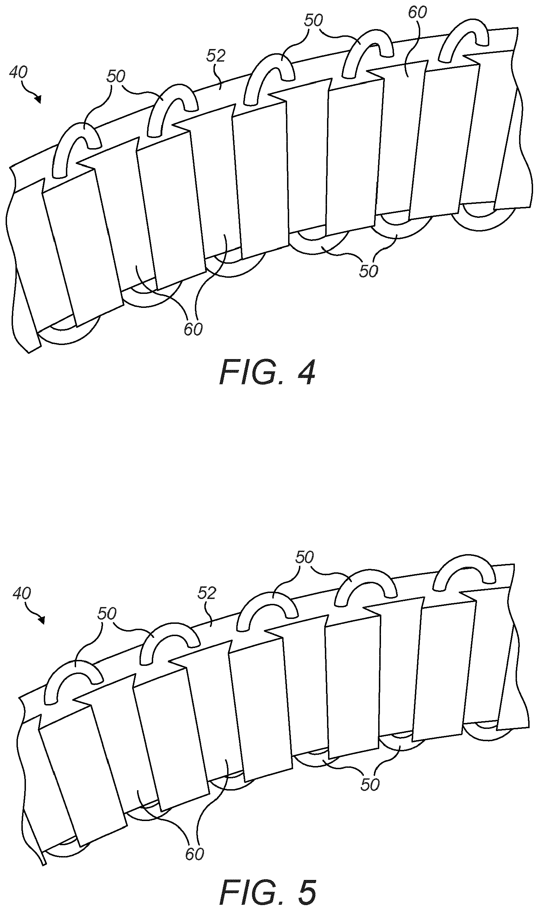

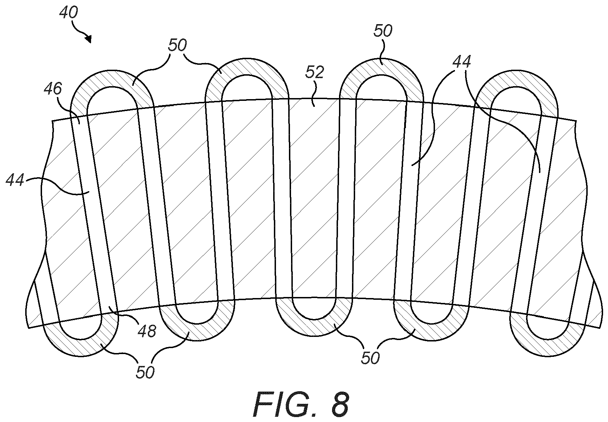

The first stator 8 comprises a first cooling jacket 40 and the second stator 12 comprises a second cooling jacket 42. Figure 4 shows the cooling jacket 40 of the first stator 8, but it will be understood that the second stator jacket 42 of the second stator 12 is substantially identical. The first cooling jacket 40 has a plurality of passages, e.g., radially-extending passages 44 (Figure 8). Each passage 44 extends between an inlet opening 46 and an outlet opening 48. The inlet and outlet openings 46, 48 of the passages 44 are fluidly connected by a plurality of U-shaped pipes 50 such that the passages 44 and the pipes 50 define one or more cooling circuits adapted to receive cooling liquid for cooling the first stator 8. The first and second stators 8, 12 are therefore cooled by two separate cooling circuits, namely the one or more liquid cooling circuits that are adapted to receive cooling liquid (e.g., water) and the air cooling circuit.

As shown in Figure 2, the first and second cooling jackets 40, 42 are fixedly mounted to the stator frame 16.

The first and second cooling jackets 40, 42 may be made of a suitable metal or metal alloy (e.g., steel, stainless steel or aluminium). The passages 44 for the cooling liquid may be formed as bores in the body 52 of each cooling jacket 40, 42, for example. Such bores may be accurately machined and minimise leakage of cooling liquid into the body of the first and second cooling jackets 40, 42. Because the cooling liquid flows directly through each cooling jacket 40, 42, there is improved transfer of heat from the stator windings to the cooling liquid. The first and second cooling jackets 40, 42 may be segmented - i.e., they may be formed as two or more jacket segments that are assembled together.

The inlet and outlet openings 46, 48 between which each passage 44 extends are formed in radially inner and outer end surfaces of each cooling jacket. Pipes 50 at the radially inner end surface of each cooling jacket 40, 42 are spaced apart from the facing mill drum surface 2a so that they do not obstruct rotation of the mill drum 2 during operation of the mill system. The pipes 50 may be fixedly connected to each cooling jacket 40, 42, e.g., by welding, bonding or fitting them to the cooling jacket body. This allows for easy detection of the leakage of the cooling liquid by visually inspecting the weld sites at the ends of the first and second cooling jackets 40, 42, for example.

The first cooling jacket 40 defines a structural part of the first stator 8.

The second cooling jacket 42 defines a structural part of the second stator 12.

The first stator 8 comprises a plurality of stator segments 54 that are removably mounted to the first cooling jacket 40. The second stator 12 comprises a plurality of stator segments 56 that are removably mounted to the second cooling jacket 42. Figures 6 and 7 show the stator segments 54 of the first stator 8, but it will be understood that the stator segments 56 of the second stator 12 are substantially identical. Each stator segment 54, 56 has a dovetail protrusion 58. An annular surface of each cooling jacket 40, 42 - i.e., the surface that faces away from the support frame 16 - has a plurality of circumferentially spaced dovetail recesses 60. The protrusion 58 of each stator segment 54 is received in a dovetail recess 60 of the first cooling jacket 40. Similarly, the protrusion 58 of each stator segment 56 is received in a dovetail recess of the second cooling jacket 42. The engagement between the dovetail protrusion 58 and the dovetail recess 60 prevents movement of each stator segment 54, 56 in the axial and circumferential directions. It also allows a stator segment 54, 56 to be removed from the respective cooling jacket 40, 42 if necessary.

The stator segments 54 are spaced apart from each other in the circumferential direction, e.g., by a circumferential gap 62. The stator segments 56 are also spaced apart from each other in the circumferential direction, e.g., by a circumferential gap.

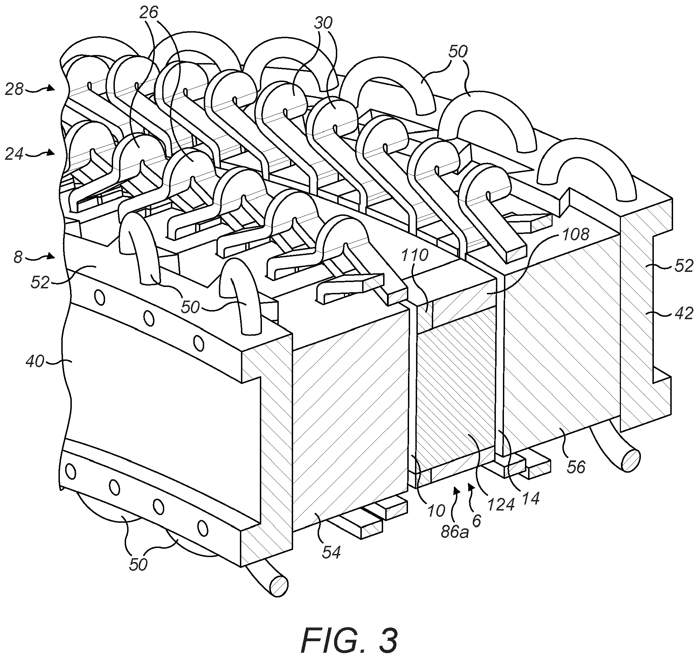

In Figures 2 to 4, the passages in the body 52 of the cooling jacket are offset so that alternate passages extend through the thickest parts of the body 52 between the dovetail recesses 60. In the alternative cooling jacket shown in Figures 5 to 8, the passages 44 are not offset.

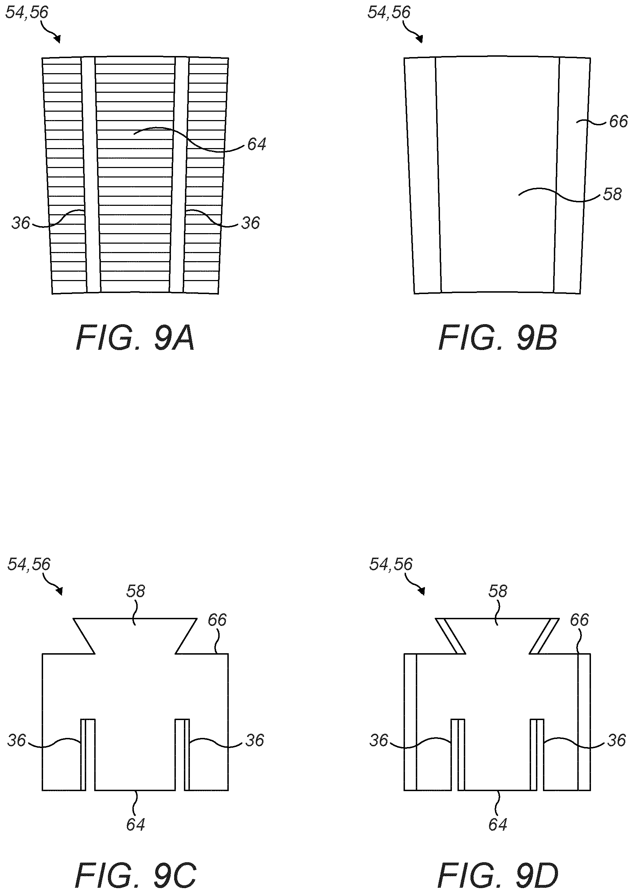

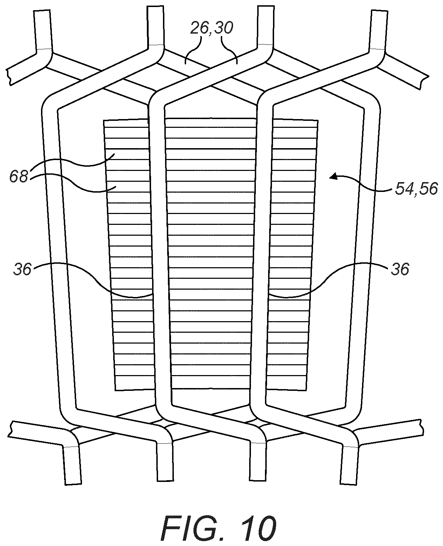

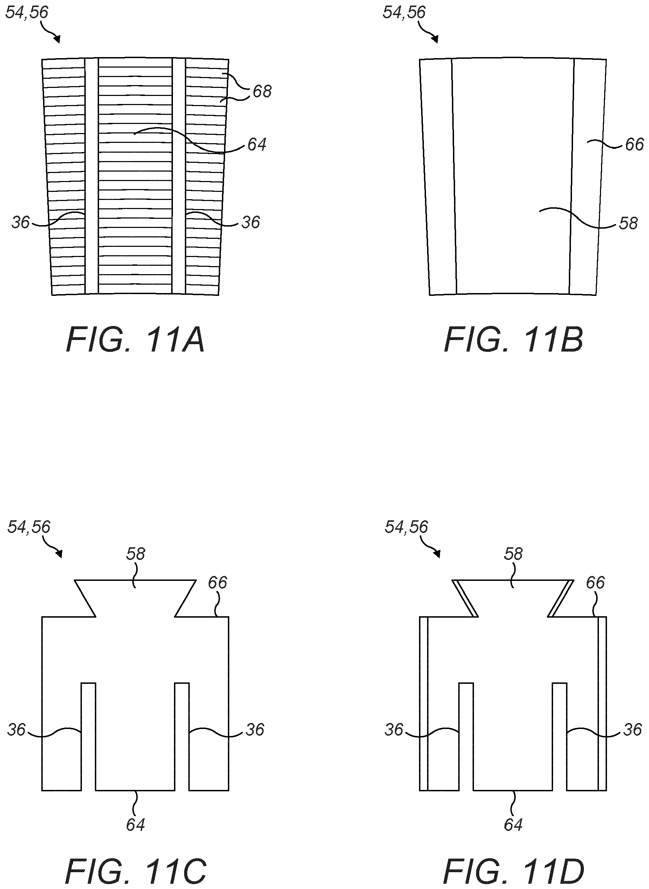

Each stator segment 54, 56 has a pair of stator slots 36. The stator slots 36 are formed in a surface 64 of each stator segment 54, 56 that faces towards the rotor assembly 6 across the axial air gap. The dovetail protrusion 58 is formed on the opposite surface 66 of each stator segment 54, 56 - i.e., the surface that faces away from the rotor assembly 6 and towards the cooling jacket 40, 42 to which the stator segments are removably mounted. The stator slots 36 may be substantially parallel to one another or arranged at an appropriate angle to each other - e.g., each stator slot may extend along a radius of the stator. The stator segment 54, 56 shown in Figures 9A to 9D, 10 and 13A has angled slots and the stator segment 54, 56 shown in Figures 11A to 11D, 12, and 14 has parallel stator slots.

Each stator segment 54, 56 has a laminated construction. The stator segments 54, 56 are formed from a stack of thin lamination sheets 68 that are stamped or cut to have an outer profile. The lamination sheets 68 may optionally be made of electrical grade steel with an insulating coating. The lamination sheets 68 are stacked together in the radial direction. The laminated construction significantly reduces eddy current losses in the stator segments 54, 56 during operation of the gearless mill drive. The stacked lamination sheets 68 may be clamped or preferably bonded.

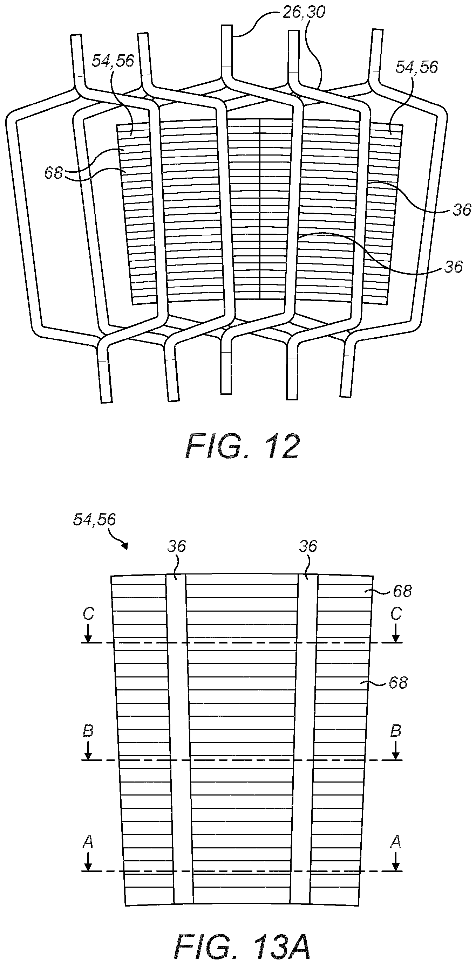

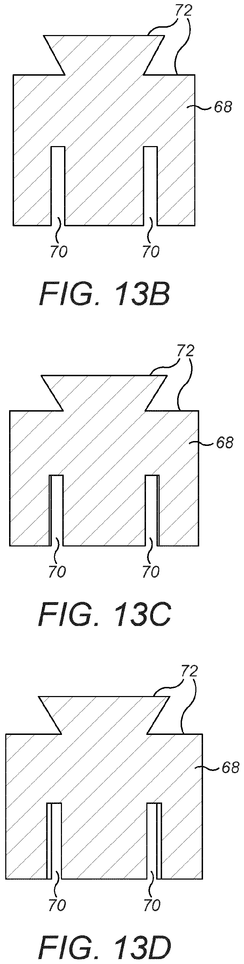

The stator segments 54, 56 may be formed from lamination sheets 68 whose shape varies in the radial direction - i.e., in the stacking direction. This may allow each stator segment 54, 56 to have a desired shape. For example, the stator segments 54, 56 may be wedge-shaped when viewed in the axial direction and where the radially inner surface of each stator segment is shorter in the circumferential direction than the radially outer surface. This is shown clearly in Figure 13A, for example. Figures 13B to 13D show how the individual lamination sheets 68 have cutout portions 70 along one edge that define the stator slots 36 in the surface of the stator segment 54, 56 when the lamination sheets 68 are stacked together in a suitable order. The opposite edge 72 of the lamination sheets 68 has a dovetail profile and defines the dovetail protrusion 58 when the lamination sheets 68 are stacked together. The stator slots 36 shown in Figure 13A are arranged at an appropriate angle to each other, e.g., so that each stator slot 36 extends along a radius of the stator. To simplify the stacking process, the lamination sheets 68 may be marked to identify their order in the lamination stack.

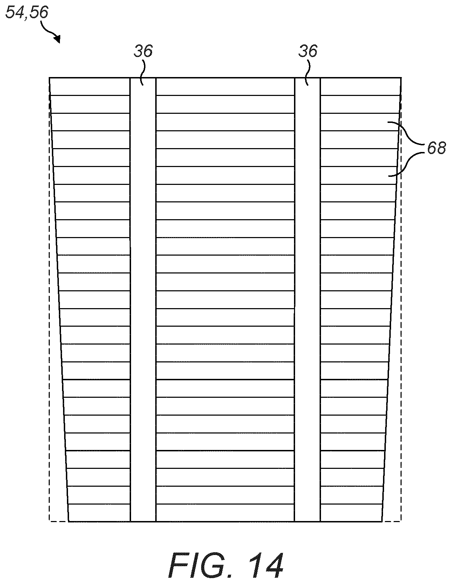

Alternatively, the cutout portions for each individual lamination sheet 68 may be selected so that the stator slots 36 are substantially parallel to one another. Figure 14 shows a stator segment 54, 56 that is formed from identical lamination sheets 68 - i.e., all of the lamination sheets have the same outer profile. This may reduce manufacturing costs and simplify the stacking process. After the lamination sheets 68 have been stacked together and bonded, the stator segment 54, 56 may need to be machined to a desired shape - e.g., so that each stator segment is wedge-shaped as described above. Figure 14 shows a stator segment 54, 56 with parallel stator slots 36 where the part that needs to be machined is indicated in dashed line. The individual lamination sheets 68 may have cutout portions along one edge that define the stator slots 36 in the surface of the stator segment 54, 56 when the lamination sheets are stacked together.

The first and second stator windings 24, 28 are electrically connected to a power converter for supplying power to the stator windings to operate the gearless mill drive 4. The power converter may be electrically connected to a power network or grid, for example, and may be used to control the rotational speed and/or torque of the gearless mill drive in a known manner.

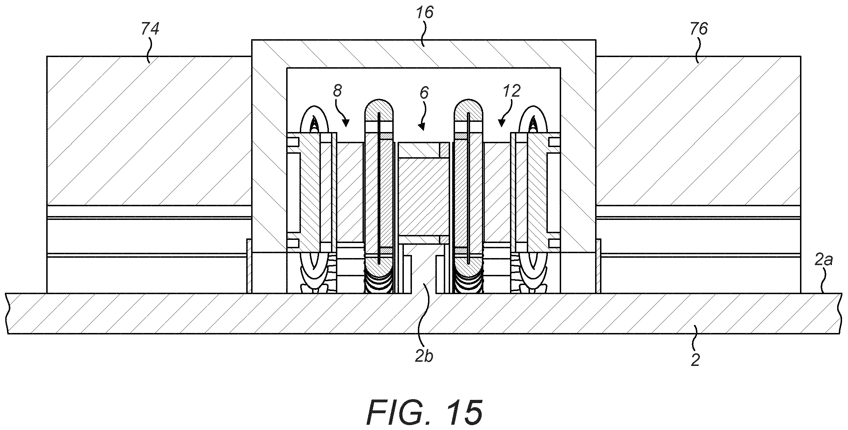

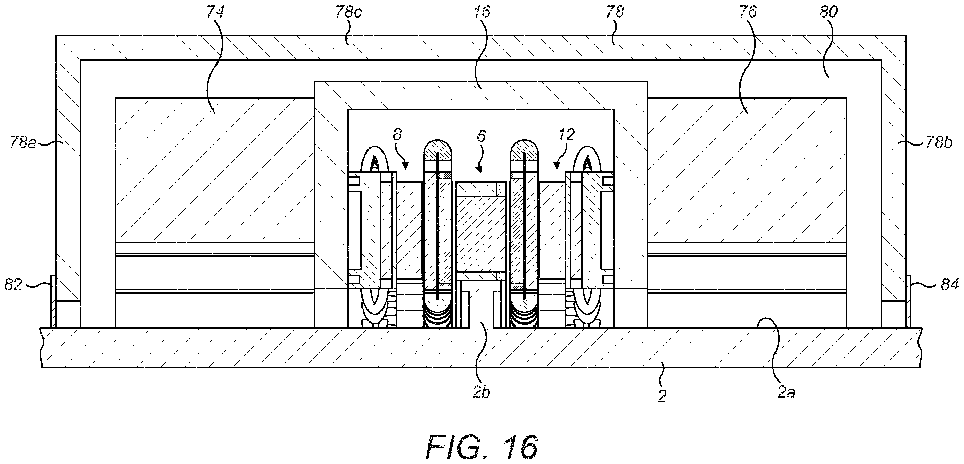

Referring to Figures 15 and 16, the power converter has a first converter assembly 74 electrically connected to the first stator winding 24 and a second converter assembly 76 electrically connected to the second stator winding 28. The first and second converter assemblies 74, 76 are physically mounted to the outside of the stator frame 16 as shown.

The rotor assembly 6, the first and second stators 8, 12, and the first and second converter assemblies 74, 76 (e.g., a plurality of individual converter units) may be surrounded by an enclosure 78. The enclosure 78 is formed as a separate component and the stator frame 16 is also surrounded by the enclosure. However, it will be understood that if the enclosure 78 is sufficiently rigid, the stator frame 16 may be omitted and the first and second stators 8, 12 may be connected or mounted to the enclosure 78. In other words, the enclosure 78 may act as a rigid, annular support that extends circumferentially around the mill drum 2 for mounting the stator assembly. The first and second converter assemblies 74, 76 may also be mounted to the enclosure 78. The enclosure 78 includes a first radially-extending wall 78a and a second radially-extending wall 78b. The first and second walls 78a, 78b are connected by a third circumferentially- and axially-extending wall 78c so that the rotor assembly 6, the first and second stators 8, 12, and the first and second converter assemblies 74, 76 are located within an enclosed space 80 that is defined by the first, second and third walls 78a, 78b and 78c of the enclosure 78 and the outer surface 2a of the rotating mill drum 2. A first sealing assembly 82 is fixedly mounted to the first wall 78a and seals between the stationary first wall and the outer surface 2a of the rotating mill drum 2 to prevent the leakage of cooling air. A second sealing assembly 84 is fixedly mounted to the second wall 78b and may seal between the stationary second wall and the outer surface 2a of the rotating mill drum 2 to prevent the leakage of cooling air. Each sealing assembly 82, 84 includes one or more sealing members that are in sliding contact with the mill drum surface 2.

Cooling air may be introduced into the enclosed space 80 by an external fan or blower (not shown). The cooling air may circulate from the enclosed space 80 into the enclosed space 18 in which the rotor assembly 6 and the first and second stators 8, 12 are located, or additional cooling air may be introduced directly into the enclosed space 18 by the external fan or blower (not shown). The fan or blower (not shown) may be mounted to the enclosure 78 with an impeller part located inside the enclosure and a motor part that is located outside the enclosure, for example.

The rotor assembly 6 is a squirrel cage rotor and is segmented - i.e., formed from a plurality of rotor segments that are arranged circumferentially around the mill drum 2. Any suitable number of rotor segments may be used. Each rotor segment is fixedly connected to the outer surface 2a of the mill drum 2.

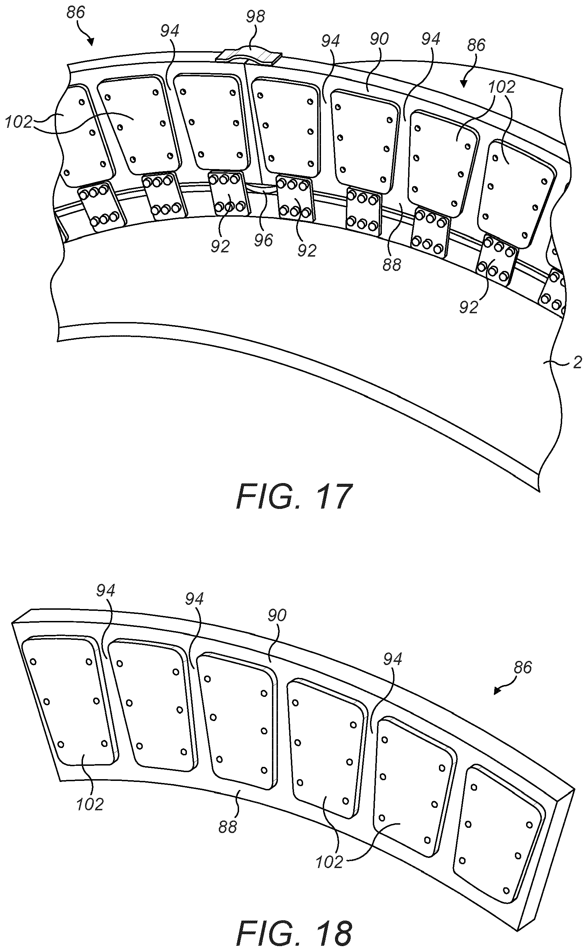

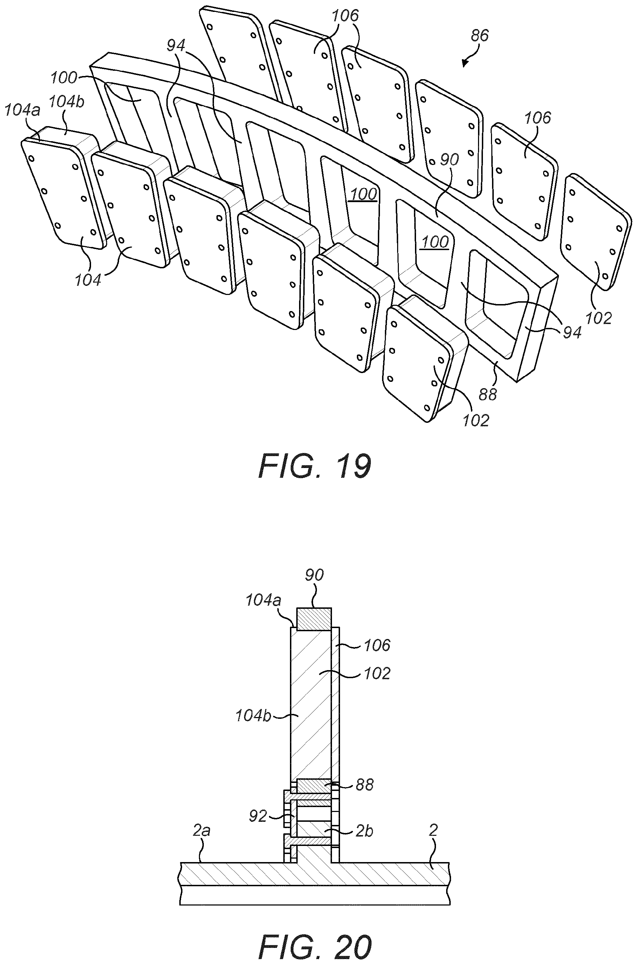

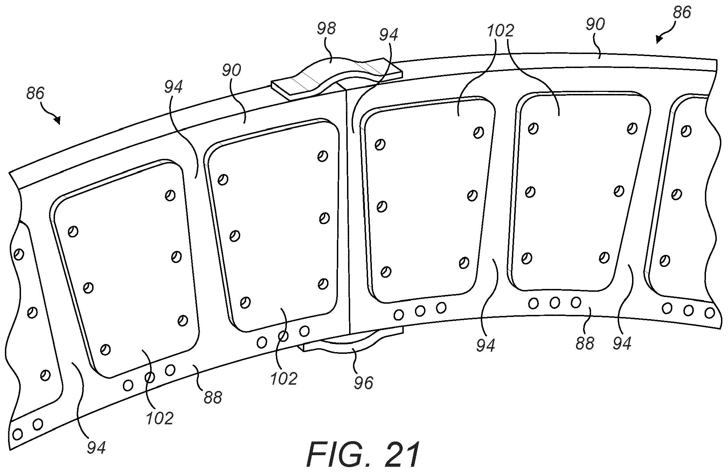

A segmented rotor assembly with a plurality of rotor segments 86 is shown in Figures 17 to 21. Each rotor segment 86 includes an electrically conductive radially inner member 88 and an electrically conductive radially outer member 90. The radially inner member 88 of each rotor segment 86 is fixedly connected to the outer surface 2a of the mill drum 2, e.g., using a plurality of mechanical fixings such as bolts or screws, for example. More particularly, Figures 17 and 20 show how each rotor segment 86 may be fixedly connected using mounting plates 92 that are bolted to the rotor segment 86 and to a radially-extending flange part 2b of the mill drum 2.

The radially inner and outer members 88, 90 are spaced apart in the radial direction. A plurality of electrically conductive bars 94 extend between the radially inner and outer members 88, 90 and are electrically connected thereto. The bars 94 extend substantially in the radial direction and are spaced apart in the circumferential direction. The radially inner and outer members 88, 90 and the bars 94 of each pre-fabricated rotor section 86 are integrally formed by casting a suitable metal or metal alloy (e.g., copper or aluminium)

The radially inner member 88 of each rotor segment 86 is electrically connected to the radially inner member 88 of the circumferentially-adjacent rotor segments 86 - i.e., to define an electrically conductive radially inner ring (or radially inner "short-circuit ring"). Similarly, the radially outer member 90 of each rotor segment 86 is electrically connected to the radially outer member 90 of the adjacent rotor segments 86 - i.e., to define an electrically conductive radially outer ring (or radially outer "short-circuit ring"). The electrical connections between the radially inner members 88 of the adjacent rotor segments 86 are made using electrically conductive flexible connectors 96. Similarly, the electrical connections between the radially outer members 90 of the adjacent rotor segments 86 may be made using electrically conductive flexible connectors 98. Such electrical connections are not strictly required - the gearless mill drive will operate even if the individual rotor segments 86 remain electrically isolated from each other, but at a reduced torque level.

The gaps 100 between the bars 94 of each rotor segment 86 are filled with two-part inserts 102. The inserts 102 may be made of a suitable metal or metal alloy (e.g., iron). Figures 19 and 20 show how each insert 102 comprises a first piece 104 and a second piece 106. The first piece 104 includes a plate piece 104a that overlaps the facing surface of the radially inner and outer members 88, 90 and the bars 94, and an inner piece 104b that is sized and shaped to fill the gap. The second piece 106 also overlaps the facing surface of the radially inner and outer members 88, 90 and the bars 94. The plate piece 104a and the second piece 106 of each insert 102 are fixedly connected to the adjacent bars 94 by bolts or screws.

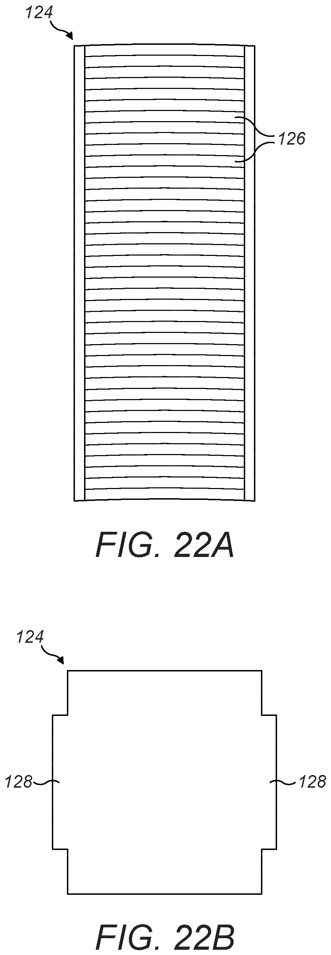

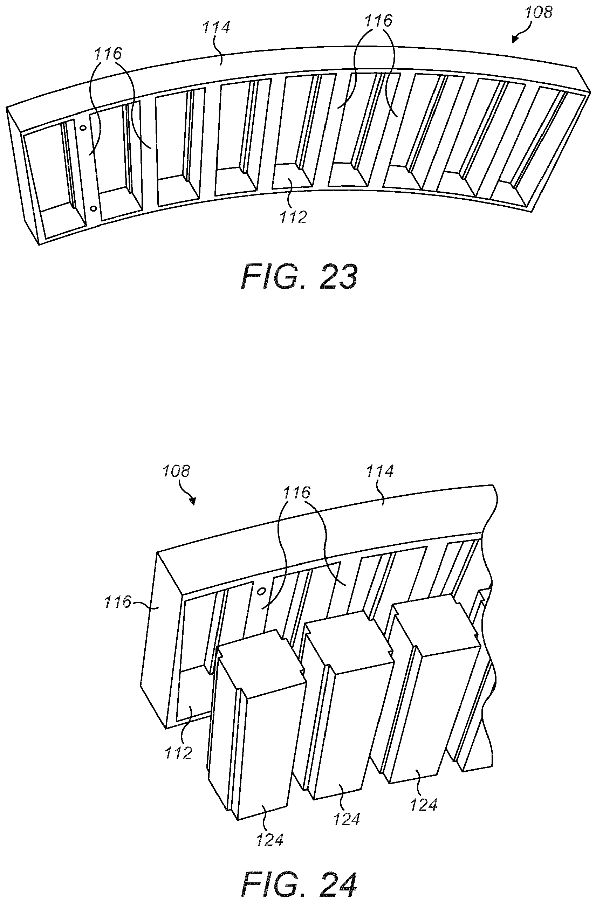

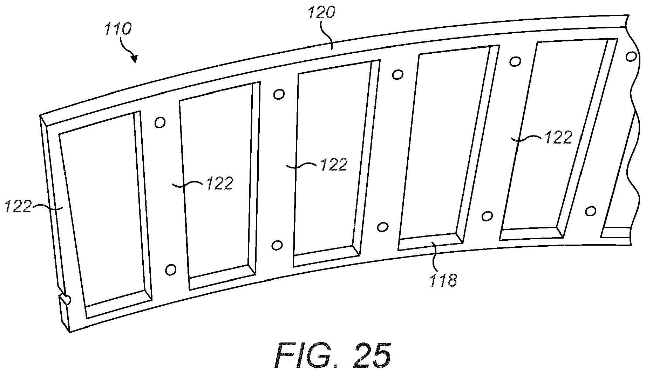

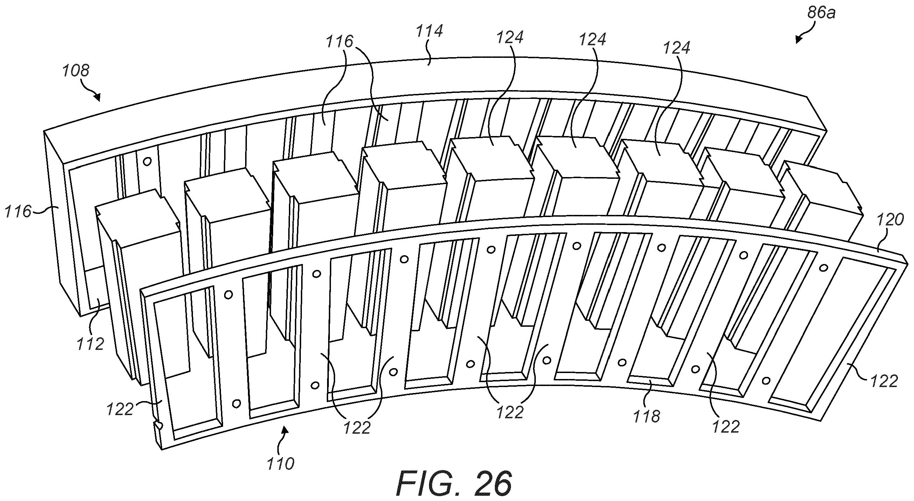

Referring to Figures 22A to 26, an alternative rotor segment 86a may be constructed from a first pre-fabricated section 108 and a second pre-fabricated section 110. The rotor assembly 6 shown in Figures 2, 3, 15 and 16 is formed from these alternative rotor segments 86a. The first pre-fabricated section 108 includes a radially inner member 112, a radially outer member 114, and bars 116. The first pre-fabricated section 108 may be integrally formed by casting a suitable metal or metal alloy (e.g., copper or aluminium). The second pre-fabricated section 110 includes a radially inner member 118, a radially outer member 120, and a bars 122. The second pre-fabricated section 110 may be integrally formed by casting a suitable metal or metal alloy (e.g., copper or aluminium). Inserts 124 are sandwiched between the first and second pre-fabricated sections 108, 110 as shown in Figure 26. Each insert 124 is sized and shaped to fill the gaps between the bars 116, 122. Each insert 124 has a laminated construction - see Figures 22A and 22B, for example. The inserts 124 are formed from a stack of thin lamination sheets 126 that are stamped or cut to have an outer profile. The lamination sheets 126 may optionally be made of electrical grade steel with an insulating coating. The lamination sheets 126 are stacked together in the radial direction. The stacked lamination sheets 126 are bonded.

Alternatively, each insert 124 may have a solid construction and may be formed from any suitable metal or metal alloy (e.g., iron).

The first and second pre-fabricated sections 108, 110 are fixedly connected together - e.g., using a plurality of mechanical fixings such as bolts or screws, or by brazing or similar. For brazing, any suitable braze material may be used. When the first and second pre-fabricated sections 108, 110 are fixedly connected together, the radially inner members 112, 118 are in abutment and define a common radially inner member of the rotor segment 86a. The radially outer members 114, 120 are also in abutment and define a common radially outer member of the rotor segment 86a. The bars 116, 122 are also in abutment and define common bars of the rotor segment 86a. The inserts 124 are retained securely between the first and second pre-fabricated sections 108, 110 once the sections have been fixedly connected together. Each insert 124 is formed with engagement features or profiles 128 that abut against the adjacent bars of the rotor segment 86a to prevent movement in the axial direction. The inserts 124 are captured between the first and second pre-fabricated sections 108, 110 and also cannot move in the circumferential and radial directions.

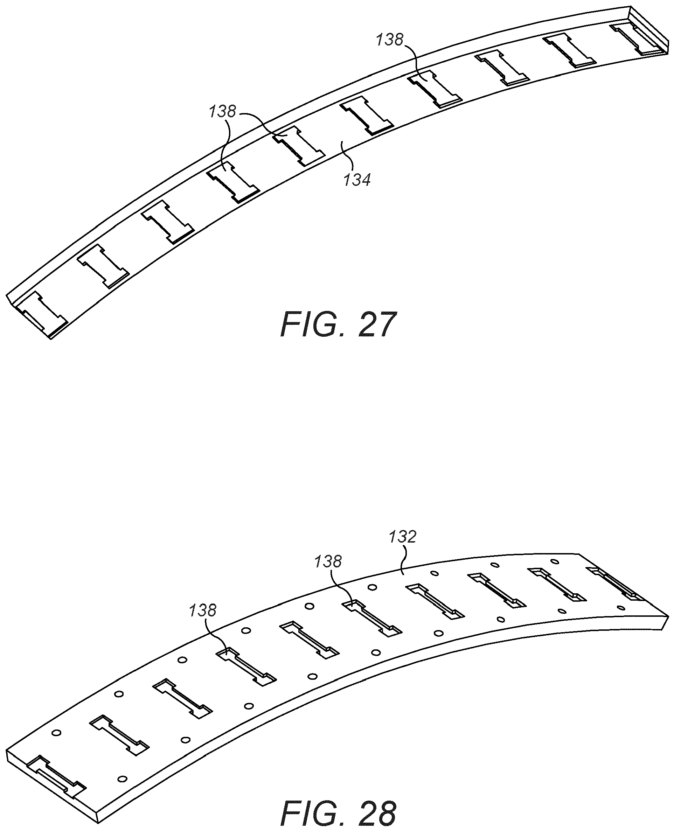

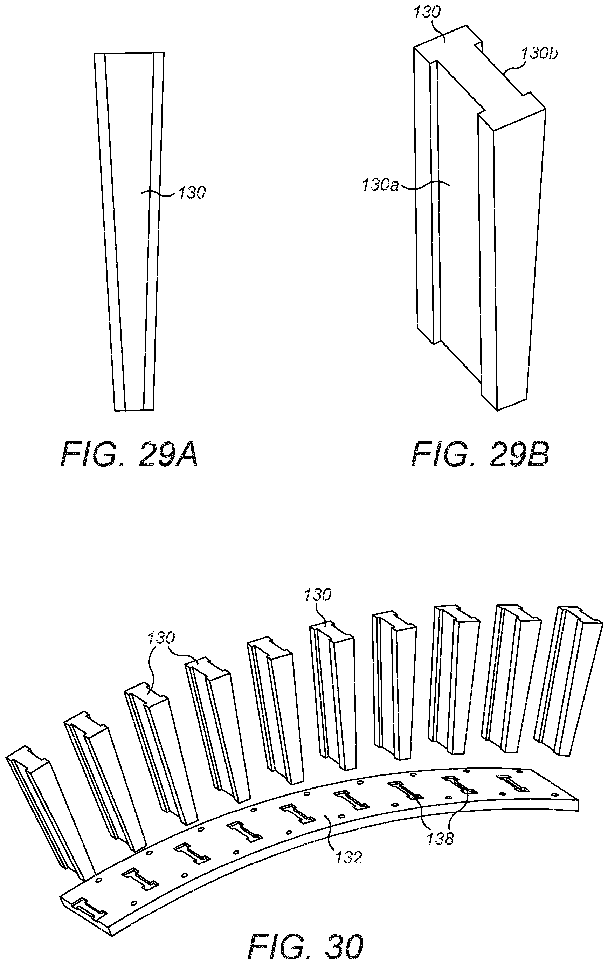

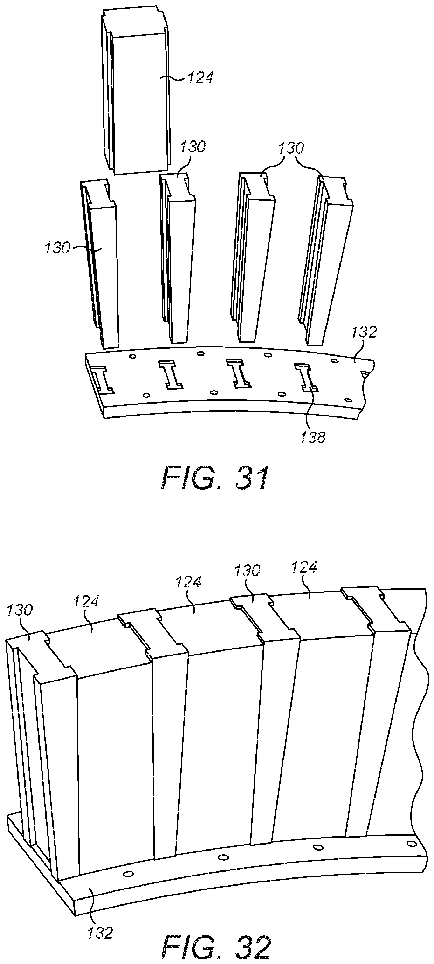

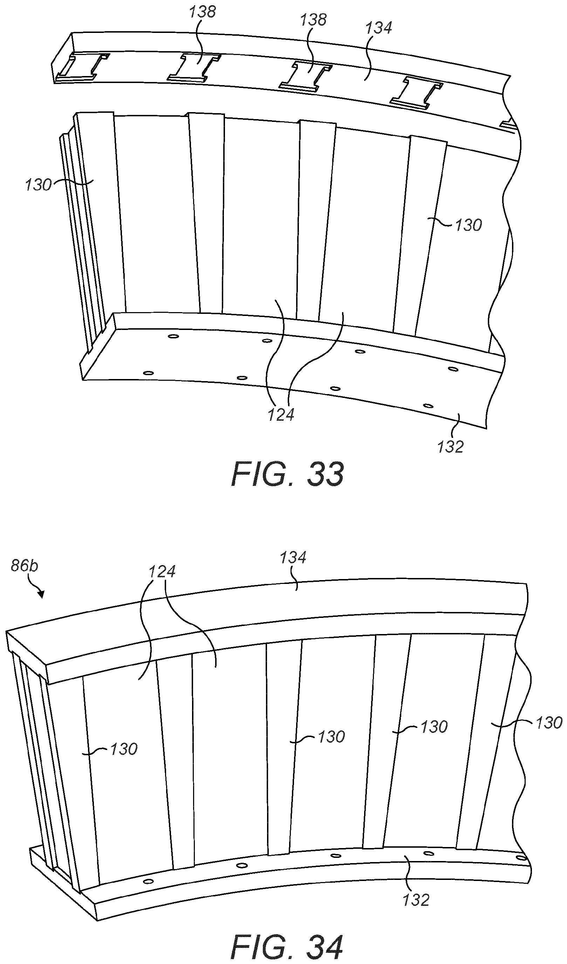

Referring to Figures 27 to 34, another alternative rotor segment 86b is formed by fixedly connecting a plurality of electrically conductive wedge-shaped bars 130 to an electrically conductive radially inner member 132 and an electrically conductive radially outer member 124. Each bar 130 has an I-shaped cross-section (i.e., formed as an I-beam). Each bar 130 therefore has a pair of grooves 130a, 130b in which the inserts 124 described above may be retained securely. One end of each bar 130 is fixedly connected to the radially inner member 132, e.g., by brazing or similar. The inserts 124 are then inserted into the circumferential gaps 136 between adjacent bars 130 where they are retained securely by the grooves 130a, 130b of the adjacent bars 130. In particular, each insert 124 may be slid into the facing grooves of the adjacent bars 130 that frame the respective gap 136 until it contacts the radially inner member 132. The radially outer member 134 is then fixedly connected to the other end of each bar 130, e.g., by brazing or similar. The inserts 124 are therefore retained securely within the grooves 130a, 130b and the radially inner and outer members 132, 134. Movement in the axial, circumferential and radial directions is prevented. Any suitable braze material may be used to fix the ends of the bars 130 to the radially inner and outer members 132, 134. The radially inner and outer members 132, 134 and the bars 130 are separately formed from a suitable metal or metal alloy (e.g., copper or aluminium). The radially inner and outer members 132, 134 include a plurality of shallow recesses 138 for receiving the respective end of each bar 130.

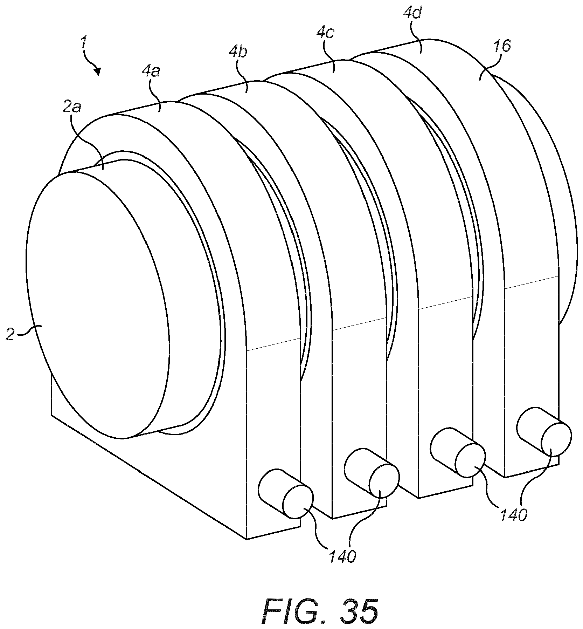

Referring to Figure 35, the mill system 1 may include a plurality of double-sided, axial flux gearless mill drives 4a, 4b, ..., 4d that are spaced apart in the axial direction. The gearless mill drives 4a, 4b, ..., 4d are used to rotate the mill drum 2. Each gearless mill drive 4a, 4b, ..., 4d includes a fan 140 which circulates cooling air around the respective stator frame 16. Each fan 140 include an impeller part located inside the stator frame 16 and a motor part located outside the stator frame.

## Claims

1. A double-sided, axial flux gearless mill drive (4) comprising:
a radially-extending rotor assembly (6) fixedly connectable to a mill drum (2) of a mill system (1); and
a stator assembly comprising;
a first stator (8) located axially adjacent a first annular surface (6a) of the rotor assembly (6) and spaced apart from the first annular surface (6a) by a first axial air gap (10), and
a second stator (12) located axially adjacent a second, opposite, annular surface (6b) of the rotor assembly (6) and spaced apart from the second annular surface (6b) by a second axial air gap (14).

2. A gearless mill drive (4) according to claim 1, wherein the first stator (8) comprises a first stator winding (24) with a plurality of first stator coils (26), and the second stator (12) comprises a second stator winding (28) with a plurality of second stator coils (30).

3. A gearless mill drive (4) according to claim 2, wherein the stator assembly further comprises a stator frame (16).

4. A gearless mill drive (4) according to claim 3, wherein the stator frame (16) defines an enclosed space (18) in which the rotor assembly (6) and the first and second stators (8, 12) are located, and wherein the enclosed space (18) is adapted to receive cooling air for cooling the rotor assembly (6) and the first and second stators (8, 12).

5. A gearless mill drive (4) according to claim 4, wherein the stator frame (16) comprises at least one sealing assembly (20, 22) adapted to seal between the stator frame (16) and a rotating outer surface (2a) of the mill drum (2) to prevent the leakage of cooling air.

6. A gearless mill drive according to any of claims 3 to 5, further comprising a first converter assembly (74) electrically connected to the first stator winding (24) and physically mounted to the stator frame (16), and a second converter assembly (76) electrically connected to the second stator winding (28) and physically mounted to the stator frame (16).

7. A gearless mill drive (4) according to claim 6, wherein the rotor assembly (6), the first and second stators (8, 12), and the first and second converter assemblies (74, 76) are surrounded by an enclosure (78).

8. A gearless mill drive (4) according to any of claims 2 to 7, wherein the first stator coils (26) are received in a plurality of first stator slots (36) formed in an annular surface of the first stator (8) that faces towards the rotor assembly (6), and the second stator coils (30) are received in a plurality of second stator slots (36) formed in an annular surface of the second stator (12) that faces towards the rotor assembly (6).

9. A gearless mill drive (4) according to any preceding claim, wherein the first stator (8) comprises a cooling jacket (40) with a plurality of passages (44), each passage (44) extending between an inlet opening (46) and an outlet opening (48), the inlet and outlet openings (46, 48) being fluidly connected by a plurality of pipes (50) such that the passages (44) and the pipes (50) define one or more cooling circuits adapted to receive cooling liquid for cooling the first stator (8).

10. A gearless mill drive (4) according to any preceding claim, wherein the first stator (8) comprises a plurality of stator segments (54), wherein each stator segment (54) has at least one engagement profile (58) adapted to engage with a corresponding engagement profile (60) on one of a cooling jacket (40) or other structural part of the first stator (8), and a stator frame (16) of the stator assembly, so that the stator segments (54) are removably mounted.

11. A gearless mill drive (4) according to claim 10, wherein each stator segment (54) comprises at least one stator slot (36) formed in a surface (64) of the stator segment (54) that faces towards the rotor assembly (6).

12. A gearless mill drive (4) according to any preceding claim, wherein the rotor assembly (6) comprises a plurality of rotor segments (86; 86a, 86b) arranged circumferentially around the mill drum (2), each rotor segment (86; 86a; 86b) comprising:
an electrically conductive radially inner member (88; 112, 118; 132) adapted to be fixedly connected to the mill drum (2),
an electrically conductive radially outer member (90; 114, 120; 134),
a plurality of electrically conductive bars (94; 122; 130) extending between the radially inner and outer members and electrically connected thereto, wherein the bars (94; 122; 130) extend substantially in the radial direction and are spaced apart in the circumferential direction, and
optionally a plurality of inserts (102; 124) located in the circumferential gaps between the bars (94; 122; 130).

13. A gearless mill drive (4) according to claim 12, wherein the radially inner member (88; 112, 118; 132) of each rotor segment (86; 86a, 86b) is electrically connected to the radially inner member (88; 112, 118; 132) of the circumferentially-adjacent rotor segments (86; 86a; 86b), and wherein the radially outer member (90; 114, 120; 134) of each rotor segment (86; 86a; 86b) is electrically connected to the radially outer member (90; 114, 120; 134) of the circumferentially-adjacent rotor segments (86; 86a; 86b), the electrical connections optionally being made using flexible connectors (96, 100).

14. A mill system (1) comprising:
a mill drum (2), and
a double-sided, axial flux gearless mill drive (4) according to any preceding claim fixedly connected to an outer surface (2a) of the mill drum (2).

15. A mill system (1) according to claim 14, comprising a plurality of double-sided, axial flux gearless mill drives (4a, 4b, ..., 4d) according to any of claims 1 to 13 fixedly connected to the outer surface (2a) of the mill drive (2), wherein the gearless mill drives (4a, 4b, ..., 4d) are spaced apart in the axial direction.
